# EUROPÄISCHE PATENTSCHRIFT

(11) **EP 1 664 496 B1**
(45) Veröffentlichungstag und Bekanntmachung des Hinweises auf die Patenterteilung: **10.12.2008**
(21) Anmeldenummer: 04765243.3
(22) Anmeldetag: 15.09.2004
(51) Int. Cl.: F01N 3/023, B01D 46/24, F01N 3/021, F01N 3/027, B01D 46/42, F01N 3/037

(54) **VERFAHREN ZUR GEGENDRUCKUNSCHÄDLICHEN ABSCHEIDUNG UND ENTSORGUNG VON PARTIKELN AUS FLUIDSTRÖMEN**
METHOD FOR SEPARATING OUT AND DISCHARGING PARTICLES FROM FLUID FLOWS WITHOUT ADVERSELY AFFECTING BACK PRESSURE
PROCEDE POUR SEPARER SANS NUIRE A LA CONTRE-PRESSION ET ELIMINER DES PARTICULES DE COURANTS FLUIDIQUES

(30) Priorität: 16.09.2003 DE 10343045
(43) Veröffentlichungstag der Anmeldung: 07.06.2006
(73) Patentinhaber: DEUTZ Aktiengesellschaft, 51149 Köln (DE)
(72) Erfinder: LINGENS, Andreas, 53639 Königswinter (DE); BREUER, Karl-Heinz, 50825 Köln (DE); MIEBACH, Rolf, 50321 Brühl (DE)
(86) Internationale Anmeldenummer: PCT/EP2004/010334
(87) Internationale Veröffentlichungsnummer: WO 2005/033478

(56) Entgegenhaltungen:
- EP-A- 0 308 972
- DE-A- 3 709 671
- DE-A- 10 036 597
- DE-A- 19 910 258
- US-A- 4 584 003
- US-A- 5 426 936
- US-A- 5 634 952
- US-A1- 2003 136 117
- US-B1- 6 233 926
- PATENT ABSTRACTS OF JAPAN Bd. 2000, Nr. 03, 30. März 2000 (2000-03-30) & JP 11 336530 A (NISSAN MOTOR CO LTD), 7. Dezember 1999 (1999-12-07)

## Beschreibung

Die Erfindung betrifft Verfahren zum Betreiben eines Filters, insbesondere eines Partikelfilters für eine Brennkraftmaschine, wobei in dem Filter durch einen Regenerationsvorgang entfernbare Partikel, insbesondere Ruß, und durch diesen Regenerationsvorgang nicht entfernbare Partikelbestandteile, insbesondere Aschen, aus einem in den Filter auf einer Rohgasseite eingeleiteten und auf einer Reingasseite hinausgeleiteten Fluidstrom durch zwangsweises Hindurchleiten des Fluidstroms durch eine die Rohgasseite von der Reingasseite trennenden Filterwand ausgeschieden werden und Partikel kontinuierlich oder diskontinuierlich aus den Rohgaskanälen des Filters durch den Regenerationsvorgang entfernt werden, während die Partikelbestandteile kontinuierlich oder diskontinuierlich entsorgt werden beziehungsweise während des Betriebs des Filters stromabwärts, längs der Rohgaskanäle, durch den Filter transportiert und in eine mit der Rohgasseite verbindbare oder verbundene Auffangvorrichtung bewegt werden.

Solche Verfahren sind aus der US 6,233,926 B1 bekannt. Hierbei werden Partikelteile auf einen Oberflächenfilter mit hinten offenen Eintrittskanälen gesammelt. Die Eintrittskanäle sind mit einem Auffangbehälter verbunden. Es wird bei den Partikelteilen zwar zwischen Partikel, insbesondere Ruß, und nicht entfernbaren Partikelbestandteilen unterschieden, Ziel der verschiedenen angegebenen Verfahrens ist es aber, sowohl die Partikel als auch die Partikelbestandteile in den Auffangbehälter zu transportieren. Lediglich wird in Kauf genommen, dass eine geringe Menge der Partikel in den Eintrittskanälen verbrannt wird. Dies soll aber normalerweise wegen der Beschädigungsgefahr des Oberflächenfilters vermieden werden.

Aus der DE 100 36 597 A1 ist ein Partikelfilter bekannt, bei dem die Partikel in dem Filter gesammelt und durch Verbrennen entsorgt werden. Die nicht brennbaren Partikelbestandteile werden durch eine Rütteleinrichtung entgegen der Strömungsrichtung der Abgase aus dem Partikelfilter in eine Auffangeinrichtung entfernt.

Der Erfindung liegt die Aufgabe zugrunde, Verfahren anzugeben, mit dem die Entfernung von nicht regenerierbaren Partikelbestandteilen aus einem Filter vereinfacht wird.

Diese Aufgabe wird gemäß dem ersten erfindungsgemäßen Verfahren dadurch gelöst, dass die Partikel rückstandsfrei in den Rohgaskanälen durch den Regenerationsvorgang in Form einer Oxidation entfernt werden, und dass die Partikelbestandteile aus dem Filter und aus der Auffangvorrichtung durch eine Öffnung oder einen Strömungsaustritt in der Form entsorgt werden, dass der Auslass aus der Reingasseite des Filters verschlossen wird und die Rohgasseite des Filters von dem Fluidstrom und/oder einem Medium gezielt durchströmt wird. Dabei wird eine Eigenschaft der Einlagerung der Partikel und der Partikelbestandteile genutzt, die im Rahmen der vorliegenden Erfindung beobachtet worden ist. Die Partikelbestandteile werden zunächst mit den Partikeln relativ gleichmäßig auf der filtrierenden Oberfläche abgesetzt. Bei Regenerationsvorgängen verschwinden die brennbaren Partikel ganz. Die Partikelbestandteile bleiben zurück. Unter dem Einfluss der Durchströmung des Rohgassystems werden die Partikelbestandteile allmählich stromabwärts transportiert und lagern sich in der Nähe von Staupunkten der Rohgasströmung endgültig ab. Vorzugsweise im Bereich solcher Staugebiete der Rohgasströmung wird die Auffangvorrichtung angeordnet. Ein Filter soll also nicht so lange betrieben werden, bis die nicht regenerierbaren Partikelbestandteile die Rohgasseite des Filters so weit zugesetzt haben, dass diese nahezu (mit allen zuvor geschilderten Nachteilen) verstopft ist und eine Reinigung unausweichlich ist. Stattdessen werden die Partikelbestandteile während des normalen Betriebs des Filters in eine kontinuierlich oder diskontinuierlich mit der Rohgasseite verbundene Auffangvorrichtung bewegt, so dass die eigentliche Filterfläche während ihrer gesamten Betriebs(lebens)zeit nur mit beispielsweise für den Abgasgegendruck nicht negativ beeinflussenden Beladungsraten beaufschlagt wird. Mit diesem Verfahren erfolgt eine besonders intensive und gründliche Entsorgung (der Partikel und) der Partikelbestandteile aus dem Filter und aus der Auffangvorrichtung, an die wiederum eine geeignete Absaugvorrichtung anschließbar ist. Die angegebene Entsorgung wird bevorzugt während eines Werkstattaufenthalts durchgeführt, kann aber gegebenenfalls auch während des normalen Betriebs der Brennkraftmaschine ohne Anschluss einer Absaugvorrichtung durchgeführt werden.

In dem alternativen Verfahren werden die Partikel ebenfalls rückstandsfrei in den Rohgaskanälen durch den Regenerationsvorgang in Form einer Oxidation entfernt, und weiterhin werden die Partikelbestandteile dadurch entfernt, dass jeder Rohgaskanal mit einer Abschlusswand verschlossen ist, die zum Entsorgen der Partikelbestandteile geöffnet wird und dass bei geöffneter Abschlusswand die Partikelbestandteile aus den Rohgaskanälen in eine Auffangvorrichtung geleitet und aus dieser entsorgt oder direkt aus den Rohgaskanälen entsorgt werden. In einem zweiten alternativen Verfahren ist eine Trennfläche (als Abschlusswand) im Filterkörper vorgesehen, an der das Filter zum Entsorgen der Partikelbestandteile geöffnet werden kann. Gegebenenfalls kann auch eine Kombination von dem ersten und zweiten alternativen Verfahren vorgesehen sein. Dabei können die Partikelbestandteile ebenfalls in eine Auffangvorrichtung geleitet werden und aus dieser entsorgt werden oder auch direkt beispielsweise durch Absaugen entsorgt werden. Beiden Verfahren ist es gemeinsam, dass verhindert wird, dass die Rohgasseite des Filters mit nicht regenerierbaren Partikelbestandteilen so weit zugesetzt ist, dass auch nach einem Regenerationsvorgang die aktive Filterfläche des Systems so weit reduziert ist, dass der Abgasgegendruck auf unzulässig hohe Werte ansteigt und eine aufwendige Reinigung durch Auswaschen oder auch ein gänzlicher Austausch des Filters notwendig ist. Für die erfindungsgemäßen Verfahren ist die Form, die Ausgestaltung, das Material und das Herstellungsverfahren des Filters prinzipiell unerheblich, wichtig ist nur, dass die Rohgasseite des Filters mit einer Auffangvorrichtung verbindbar oder verbunden ist beziehungsweise die Rohgaskanäle, die jegliche Form haben können, mit einer zumindest teilweise zu öffnenden Abschlusswand versehen sind.

In Weiterbildung der Erfindung wird der Fluidstrom dauernd, gelegentlich oder bei Bedarf in eine pulsierende Strömung versetzt. Die pulsierende Strömung wird vom Abgasstrom der Brennkraftmaschine angeregt und kann gezielt durch Resonanzzustände verstärkt werden. Die Pulsation kann auch aktiv ausgelöst werden, zum Beispiel durch eine geeignete Betätigung der Motorbremsklappe, der VTG-Verstellung oder des Wastegateventils eines Abgasturboladers. Erreicht wird durch die pulsierende Strömung, dass insbesondere die Partikelbestandteile von der Filterwand, an der sie nach der Ausfilterung aus dem Fluidstrom anhaften, losgelöst werden und in Richtung der Auffangvorrichtung beziehungsweise der Abschlusswand bewegt werden. Dieser Wandereffekt tritt auch bei einem geschlossenen System (Auffangbehälter) auf, wird aber verstärkt, wenn - wie später ausgeführt wird - das System (der Auffangbehälter) gezielt durchströmt wird. Alternativ oder zusätzlich zu der Pulsation des Fluidstroms kann auf der Rohgasseite ein unter Druck stehendes Medium, insbesondere Druckluft, vorzugsweise durch ein Düsensystem in den Filter eingeleitet werden.

In weiterer Ausgestaltung der Erfindung ist insbesondere die Auffangvorrichtung - wie zuvor schon ausgeführt - durchströmt, d. h. ein geringer Abgasstrom oder auch ein direkt eingeleiteter geringer Fluidstrom wird gezielt durch die Auffangvorrichtung geleitet. Insbesondere in Verbindung mit der pulsierenden Strömung werden dadurch die Partikelbestandteile kontinuierlich in die Auffangvorrichtung bewegt. Um die neben den Partikelbestandteilen auch in die Auffangvorrichtung bewegten Partikel zu entfernen, ist die Auffangvorrichtung mit einer regenerierbaren Filteroberfläche versehen, so dass die neben den Partikelbestandteilen in die Auffangvorrichtung bewegten Partikel durch Regeneration separat entfernt werden können. Dadurch ist auch die Sammelkapazität der Auffangvorrichtung erhöht. Der Strömungsaustritt aus der Auffangvorrichtung ist vorzugsweise mit der Reingasseite verbunden. Dabei ist der Anteil der durch den Strömungsaustritt austretenden Partikel beziehungsweise Partikelbestandteile vernachlässigbar gering. Die Entsorgung der Partikelbestandteile und auch gegebenenfalls der Partikel, die in der Auffangvorrichtung gesammelt sind, erfolgt beispielsweise mittels einer Absaugvorrichtung, die vorzugsweise während eines standardmäßigen Werkstattaufenthalts angeschlossen wird. Es ist aber auch vorgesehen, beispielsweise mit einem entsprechenden (Industrie)-Staubsauger vor Ort die Absaugung vorzunehmen. Die Filtertüten der Staubsauger sind dann entsprechend der gegebenenfalls bestehenden Vorschriften zu entsorgen. Dabei verbleibt der Filter mitsamt Gehäuse und eventuellem Zubehör an der Brennkraftmaschine bzw. in dem entsprechenden Fahrzeug, so das der Reinigungsaufwand gegenüber herkömmlichen Systemen erheblich reduziert ist.

Die Regeneration des Filters gegebenenfalls einschließlich der regenerierbaren Filteroberfläche der Auffangvorrichtung erfolgt durch Einleiten von Stickstoffdioxid in den Filter, so dass eine kontinuierliche (gesteuerte) Oxidation von Ruß erfolgt. Selbstverständlich kann der Filter auch diskontinuierlich thermisch beispielsweise mittels eines Brenners oder mittels einer in den Filter integrierten (elektrische) Heizeinrichtung regeneriert werden

Die entsprechend den Verfahren ausgebildeten Filter weisen selbstverständlich optional alle Einrichtungen auf, die für die zuvor diskutierten Weiterbildungen der grundsätzlichen Verfahren benötigt werden.

Weitere vorteilhafte Ausgestaltungen der Erfindung sind der Zeichnungsbeschreibung zu entnehmen, in der in den Figuren dargestellte Ausführungsbeispiele beschrieben sind.

Es zeigen:
- Fig. 1: eine erste Ausführungsform eines entsprechenden Filters und
- Fig. 2, 2a: eine zweite Ausführungsform eines entsprechenden Filters.

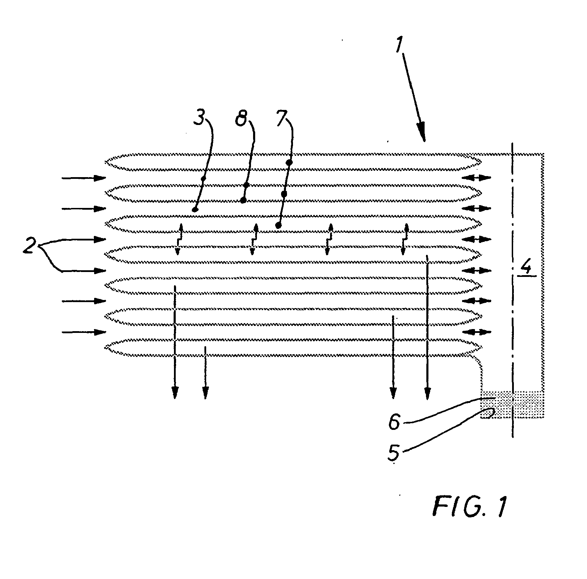

Der in Fig. 1 dargestellte Filter 1 wird zur Reinigung der Abgase einer insbesondere selbstzündenden Brennkraftmaschine eingesetzt, wobei in den Abgasen Partikel, insbesondere Rußpartikel, und Partikelbestandteile, insbesondere Aschen, enthalten sind. Die Aschen sind insbesondere verbrannte Bestandteile des Schmieröls der Brennkraftmaschine und im Gegensatz zu den Partikeln nicht durch thermische oder sonstige Regenerationsverfahren aus dem Filter 1, insbesondere einem Rußfilter entfernbar. Sowohl die Partikel als auch die Partikelbestandteile werden in dem Filter 1 aus dem Abgas, dessen Strömungsbewegung 2 eingangsseitig in den Filter 1 durch die Pfeile dargestellt ist, ausgeschieden. Dies erfolgt dadurch, dass der Filter 1 von einem Gehäuse umgeben ist, das einen Einlass aufweist, der in einem Einlassbereich die Abgase auf der Rohgasseite in Rohgaskanäle 3 einleitet. Die Rohgaskanäle 3 sind zu einem in dem Filter 1 angeordneten Sammelraum 4 hin offen, der Sammelraum 4 ist aber ausschließlich mit einer als Sammelbehälter ausgebildeten Auffangvorrichtung 5 verbunden. Sowohl der Sammelraum 4 als auch die Auffangvorrichtung 5 sind zur Umgebung hin dicht verschlossen (lediglich in der Auffangvorrichtung 5 kann eine später erläuterte Öffnung für ein geringfügige Durchströmung eingearbeitet sein). Damit wird das Abgas zwangsläufig durch die einen Rohgaskanal 3 von einem Reingaskanal 7 trennende Filterwand 8 beziehungsweise Filterwände 8 geleitet. Die Reingaskanäle 7 münden in einem von dem Einlassbereich getrennten Auslassbereich des Gehäuses, der mit einem Auslass in der Gehäusewand in Verbindung steht. In Ausführungsbeispiel gemäß Fig. 1 sind die Rohgaskanäle 3 ebenso wie die Reingaskanäle 7 als Flachkanäle ausgebildet, die beispielsweise angenähert rechtwinklig zueinander bzw. aufeinander jeweils abwechselnd angeordnet sind, so dass sich ein klar überschaubarer Filteraufbau ergibt. Während des Durchströmens des Filters 1 bzw. genauer des Durchdringens der Filterwände 8 werden sowohl die Partikel als auch die Partikelbestandteile aus dem Abgas ausgefiltert und verbleiben in den Rohgaskanälen 3 und haften normalerweise an der Stelle, an der das Abgas die Filterwand 8 durchdringt, an. Die Partikel werden nun durch einen kontinuierlichen oder diskontinuierlichen Regenerationsvorgang rückstandsfrei entfernt, während aber die Partikelbestandteile zunächst einmal an der entsprechenden Stelle an der Filterwand verbleiben. Insbesondere durch die Pulsation des Abgasstroms, die gegebenenfalls bewusst herbeigeführt oder verstärkt wird, werden die Partikelbestandteile von der Filterwand 8 losgerissen und bewegen sich in Richtung auf den Sammelraum 4 und werden in einer Auffangvorrichtung 5 als Agglomerat 6 von Partikelbestandteilen aufgesammelt. Diese Bewegung wird unterstützt beziehungsweise verstärkt, wenn durch die zuvor genannte Öffnung in der Auffangvorrichtung 5 eine geringe Strömungsgeschwindigkeit in diese Richtung vorhanden ist.

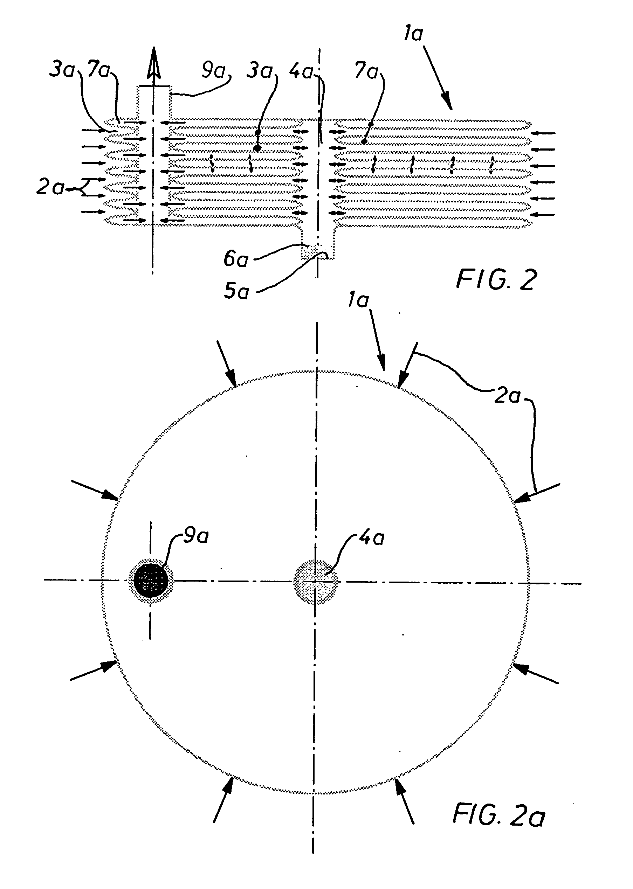

Das Ausführungsbeispiel gemäß dem Schnitt nach Fig. 2 und der Draufsicht nach Fig. 2a zeigt einen Eilter 1a, der im Prinzip genauso wie der zuvor beschriebene Filter 1 funktioniert, nur anders aufgebaut ist. Hier ist der Filter 1a zylinderförmig ausgebildet und der Sammelraum 4a vorzugsweise in der Zylindermittelachse angeordnet. Der Auslassbereich ist bei diesem Ausführungsbeispiel durch einen Sammelkanal 9a gebildet, der im Prinzip an beliebiger Stelle in dem Filter 1a angeordnet sein kann. Zu diesem Sammelkanal 9a hin sind die Reingaskanäle 7a offen, während die Rohgaskanäle 3a zu dem Sammelraum 4a hin offen sind. Dieser Filter 1a ist in ein Gehäuse eingesetzt, bei dem der Einlassbereich in die Rohgaskanäle 3a ringförmig den Filter 1a umgibt. Der Auslassbereich mit einem zentralen Auslass aus dem Gehäuse schließt an den Sammelkanal 9a an. In der Auffangvorrichtung 5a werden die Partikelbestandteile als Agglomerat 6 aufgesammelt. Die in den Ausführungsbeispielen jeweils dargestellte Ausgestaltung des Filters 1, 1a kann im Rahmen der Erfindung auch beliebige andere Gestaltungen (oval, kegelförmig, eckig, usw.) aufweisen.

## Patentansprüche

1. Verfahren zum Betreiben eines Filters (1, 1a), insbesondere eines Partikelfilters für eine Brennkraftmaschine, wobei in dem Filter (1, 1a) durch einen Regenerationsvorgang entfernbare Partikel, insbesondere Ruß, und durch diesen Regenerationsvorgang nicht entfernbare Partikelbestandteile, insbesondere Aschen, aus einem in den Filter (1, 1a) auf einer Rohgasseite eingeleiteten und auf einer Reingasseite hinausgeleiteten Fluidstrom durch zwangsweises Hindurchleiten des Fluidstroms durch eine die Rohgasseite von der Reingasseite trennenden Filterwand (8) ausgeschieden werden und Partikel kontinuierlich oder diskontinuierlich aus den Rohgaskanälen (3) des Filters (1, 1a) durch den Regenerationsvorgang entfernt werden, während die Partikelbestandteile aus dem Filter (1, 1a) entsorgt werden, wobei die Partikelbestandteile kontinuierlich oder diskontinuierlich während des Betriebs des Filters (1, 1a) stromabwärts, längs der Rohgaskanäle (3), durch den Filter (1, 1a) transportiert und in eine mit der Rohgasseite verbindbare oder verbundene Auffangvorrichtung (5, 5a) bewegt werden,
***dadurch gekennzeichnet, dass*** die Partikel rückstandsfrei in den Rohgaskanälen (3) durch den Regenerationsvorgang in Form einer Oxidation entfernt werden, und dass die Partikelbestandteile aus dem Filter (1, 1a) und aus der Auffangvorrichtung (5, 5a) durch eine Öffnung oder einen Strömungsaustritt in der Form entsorgt werden, dass der Auslass aus der Reingasseite des Filters (1, 1a) verschließbar ist und die Rohgasseite des Filters (1, 1a) von dem Fluidstrom und/oder einem Medium gezielt durchströmt wird.

2. Verfahren zum Betreiben eines Filters (1, 1a), insbesondere eines Partikelfilters für eine Brennkraftmaschine, wobei in dem Filter (1, 1a) durch einen Regenerationsvorgang entfernbare Partikel, insbesondere Ruß, und durch diesen Regenerationsvorgang nicht entfernbare Partikelbestandteile, insbesondere Aschen, aus einem in den Filter (1, 1a) auf einer Rohgasseite eingeleiteten und auf einer Reingasseite hinausgeleiteten Fluidstrom durch zwangsweises Hindurchleiten des Fluidstroms durch eine die Rohgasseite von der Reingasseite trennenden Filterwand (8) ausgeschieden werden und Partikel kontinuierlich oder diskontinuierlich aus den Rohgaskanälen (3) des Filters (1, 1a) durch den Regenerationsvorgang entfernt werden, während die Partikelbestandteile in Durchströmungsrichtung aus dem Filter (1, 1a) entsorgt werden,
***dadurch gekennzeichnet, dass*** die Partikel rückstandsfrei in den Rohgaskanälen (3) durch den Regenerationsvorgang in Form einer Oxidation entfernt werden und dass weiterhin die Partikelbestandteile **dadurch** entfernt werden, dass jeder Rohgaskanal (3) mit einer Abschlusswand verschlossen ist, die zum Entsorgen der Partikelbestandteile geöffnet wird und dass bei geöffneter Abschlusswand die Partikelbestandteile aus den Rohgaskanälen (3) in eine Auffangvorrichtung (5, 5a) geleitet und aus dieser entsorgt oder direkt aus den Rohgaskanälen (3) entsorgt werden.

3. Verfahren nach Anspruch 1 oder 2,
**dadurch gekennzeichnet, dass** der Fluidstrom in eine pulsierende Strömung versetzt wird.

4. Verfahren nach einem der vorherigen Ansprüche,
***dadurch gekennzeichnet, dass*** auf der Rohgasseite ein unter Druck stehendes Medium, insbesondere Druckluft, in den Filter (1, 1a) einleitbar ist.

5. Verfahren nach einem der Ansprüche 1, 3 oder 4,
**dadurch gekennzeichnet, dass** die Auffangvorrichtung (5, 5a) durchströmt ist.

6. Verfahren nach einem der Ansprüche 1, 3, 4, 5
***dadurch gekennzeichnet, dass*** die Auffangvorrichtung (5, 5a) mit einer regenerierbaren Filteroberfläche versehen ist.

7. Verfahren nach einem der Ansprüche 5 oder 6,
***dadurch gekennzeichnet, dass*** der Strömungsaustritt aus der Auffangvorrichtung (5, 5a) mit der Reingasseite verbunden ist.

8. Verfahren nach einem der Ansprüche 2 bis 7,
***dadurch gekennzeichnet, dass*** der Auslass aus der Reingasseite des Filters (1, 1 a) verschließbar ist.

9. Verfahren nach einem der vorherigen Ansprüche,
***dadurch gekennzeichnet, dass*** die Regeneration durch Einleiten von Stickstoffdioxid in den Filter (1, 1a) durchgeführt wird.

## Claims

1. Method for operating a filter (1, 1a), in particular a particle filter for an internal combustion engine, wherein in the filter (1, 1a), particles which can be removed by means of a regeneration process, in particular soot, and particle constituents which cannot be removed by means of said regeneration process, in particular ashes, are separated out of a fluid flow, which is conducted into the filter (1, 1a) at an untreated-gas side and conducted out at a purified-gas side, by forced conduction of the fluid flow through a filter wall (8) which separates the untreated-gas side from the purified-gas side, and particles are continuously or discontinuously removed from the untreated-gas ducts (3) of the filter (1, 1a) by the regeneration process while the particle constituents are discharged from the filter (1, 1a), with the particle constituents being transported downstream through the filter (1, 1a) along the untreated-gas ducts (3), and being moved into a collecting device (5, 5a) which can be or is connected to the untreated-gas side, continuously or discontinuously during the operation of the filter (1, 1a),
**characterized in that** the particles are removed, without residues being left in the untreated-gas ducts (3), by the regeneration process in the form of an oxidation, and **in that** the particle constituents are discharged from the filter (1, 1a) and from the collecting device (5, 5a) through an opening or a flow outlet in such a manner that the outlet from the purified-gas side of the filter (1, 1a) can be closed off and the untreated-gas side of the filter (1, 1a) is traversed in a targeted fashion by the fluid flow and/or by a medium.

2. Method for operating a filter (1, 1a), in particular a particle filter for an internal combustion engine, wherein in the filter (1, 1a), particles which can be removed by means of a regeneration process, in particular soot, and particle constituents which cannot be removed by means of said regeneration process, in particular ashes, are separated out of a fluid flow, which is conducted into the filter (1, 1a) at an untreated-gas side and conducted out at a purified-gas side, by forced conduction of the fluid flow through a filter wall (8) which separates the untreated-gas side from the purified-gas side, and particles are continuously or discontinuously removed from the untreated-gas ducts (3) of the filter (1, 1a) by the regeneration process while the particle constituents are discharged from the filter (1, 1a) in the throughflow direction,
**characterized in that** the particles are removed, without residues being left in the untreated-gas ducts (3), by the regeneration process in the form of an oxidation, and **in that**, furthermore, the particle constituents are removed by virtue of each untreated-gas duct (3) being closed off by a closure wall which is opened in order to discharge the particle constituents, and by virtue of the particle constituents being conducted out of the untreated-gas ducts (3) into a collecting device (5, 5a) and discharged from the latter, or being discharged directly from the untreated-gas ducts (3), when the closure wall is open.

3. Method according to Claim 1 or 2,
**characterized in that** the fluid flow is set into a pulsating flow.

4. Method according to one of the preceding claims,
**characterized in that** a pressurized medium, in particular compressed air, can be conducted into the filter (1, 1a) on the untreated-gas side.

5. Method according to one of Claims 1, 3 or 4,
**characterized in that** the collecting device (5, 5a) is traversed by flow.

6. Method according to one of Claims 1, 3, 4, 5,
**characterized in that** the collecting device (5, 5a) is provided with a regenerable filter surface.

7. Method according to one of Claims 5 or 6,
**characterized in that** the flow outlet from the collecting device (5, 5a) is connected to the purified-gas side.

8. Method according to one of Claims 2 to 7,
**characterized in that** the outlet from the purified-gas side of the filter (1, 1a) can be closed off.

9. Method according to one of the preceding claims,
**characterized in that** the regeneration is carried out by introducing nitrogen dioxide into the filter (1, 1a).

## Revendications

1. Procédé de fonctionnement d'un filtre (1, 1a), en particulier d'un filtre à particules pour un moteur à combustion interne, dans lequel des particules pouvant être éliminées dans le filtre (1, 1a) par une opération de régénération, en particulier de la suie, et des constituants particulaires ne pouvant pas être éliminés par cette opération de régénération, en particulier des cendres, sont séparés d'un courant de fluide introduit dans le filtre (1, 1a) d'un côté de gaz bruts et ressorti d'un côté de gaz propres par passage forcé du courant de fluide à travers une paroi du filtre (8) séparant le côté de gaz bruts du côté de gaz propres et les particules sont éliminées en continu ou de manière discontinue hors des canaux de gaz bruts (3) du filtre (1, 1a) par l'opération de régénération, tandis que les constituants particulaires sont rejetés hors du filtre (1, 1a), les constituants particulaires étant transportés en continu ou de manière discontinue pendant le fonctionnement du filtre (1, 1a) vers l'aval, le long des canaux de gaz bruts (3), à travers le filtre (1, 1a) et étant amenés dans un dispositif de collecte (5, 5a) connecté ou pouvant être connecté au côté de gaz bruts,
**caractérisé en ce que**
les particules sont éliminées sans résidu dans les canaux de gaz bruts (3) par l'opération de régénération sous forme d'une oxydation, et **en ce que** les constituants particulaires sont rejetés hors du filtre (1, 1a) et hors du dispositif de collecte (5, 5a) par une ouverture ou une sortie d'écoulement de telle façon que la sortie hors du côté de gaz propres du filtre (1, 1a) puisse être fermée et que le côté de gaz bruts du filtre (1, 1a) soit parcouru de manière ciblée par le courant de fluide et/ou par un milieu.

2. Procédé de fonctionnement d'un filtre (1, 1a), en particulier d'un filtre à particules pour un moteur à combustion interne, dans lequel des particules pouvant être éliminées dans le filtre (1, 1a) par une opération de régénération, en particulier de la suie, et des constituants particulaires ne pouvant pas être éliminés par cette opération de régénération, en particulier des cendres, sont séparés d'un courant de fluide introduit dans le filtre (1, 1a) d'un côté de gaz bruts et ressorti d'un côté de gaz propres par passage forcé du courant de fluide à travers une paroi du filtre (8) séparant le côté de gaz bruts du côté de gaz propres et les particules sont éliminées en continu ou de manière discontinue hors des canaux de gaz bruts (3) du filtre (1, 1a) par l'opération de régénération, tandis que les constituants particulaires sont rejetés hors du filtre (1, 1a) dans la direction d'écoulement,
**caractérisé en ce que**
les particules sont éliminées sans résidu dans les canaux de gaz bruts (3) par l'opération de régénération sous forme d'une oxydation, et **en ce qu'**en outre, les constituants particulaires sont éliminés par le fait que chaque canal de gaz bruts (3) est fermé par une paroi de terminaison, qui est ouverte pour rejeter les constituants particulaires et **en ce que**, lorsque la paroi de terminaison est ouverte, les constituants particulaires sont guidés hors des canaux de gaz bruts (3) dans un dispositif de collecte (5, 5a) et sont rejetés hors de celui-ci ou directement hors des canaux de gaz bruts (3).

3. Procédé selon la revendication 1 ou 2,
**caractérisé en ce que**
le courant de fluide est entraîné en un écoulement pulsé.

4. Procédé selon l'une quelconque des revendications précédentes, **caractérisé en ce qu'**un milieu sous pression, notamment de l'air sous pression, peut être introduit dans le filtre (1, 1a) du côté de gaz bruts.

5. Procédé selon l'une quelconque des revendications 1, 3 ou 4,
**caractérisé en ce que** le dispositif de collecte (5, 5a) est parcouru par l'écoulement.

6. Procédé selon l'une quelconque des revendications 1, 3, 4, 5,
**caractérisé en ce que** le dispositif de collecte (5, 5a) est pourvu d'une surface de filtre pouvant être régénérée.

7. Procédé selon l'une quelconque des revendications 5 ou 6,
**caractérisé en ce que** la sortie de l'écoulement hors du dispositif de collecte (5, 5a) est connectée au côté de gaz propres.

8. Procédé selon l'une quelconque des revendications 2 à 7,
**caractérisé en ce que** la sortie hors du côté de gaz propres du filtre (1, 1a) peut être fermée.

9. Procédé selon l'une quelconque des revendications précédentes,
**caractérisé en ce que** la régénération est effectuée en introduisant du dioxyde d'azote dans le filtre (1, 1a).
